Europäisches Patentamt

European Patent Office

Office européen des brevets

(19)

(11) Numéro de publication : **0 335 808 B1**

(12) **FASCICULE DE BREVET EUROPEEN**

(45) Date de publication du fascicule du brevet :
**13.11.91 Bulletin 91/46**

(51) Int. Cl.⁵ : **G01B 17/02**

(21) Numéro de dépôt : **89420109.4**

(22) Date de dépôt : **28.03.89**

(54) **Procédé de contrôle ultrasonore de l'épaisseur de placage d'un tube métallique, dispositif correspondant et application à des tubes en alliage de Zr plaqué.**

(30) Priorité : **30.03.88 FR 8804726**

(43) Date de publication de la demande :
**04.10.89 Bulletin 89/40**

(45) Mention de la délivrance du brevet :
**13.11.91 Bulletin 91/46**

(84) Etats contractants désignés :
**DE SE**

(56) Documents cités :
**EP-A- 0 206 296**
**DE-A- 2 127 676**
**FR-A- 2 483 073**
**JP-A-62 140 010**
**JP-A-62 204 107**
**US-A- 3 382 707**
**PATENT ABSTRACTS OF JAPAN, vol. 11, no.**
**298 (P-260)[2745], 26 septembre 1987; & JP-**
**A-62 91 806 (NIPPON KOKAN K.K.) 27-04-1987**
**PATENT ABSTRACTS OF JAPAN, vol. 9, no.**
**312 (P-411)[2035], 7 décembre 1985; & JP-A-60**
**142 210 (MITSUBISHI KINZOKU K.K.) 27-**
**07-1985**
**Idem**
**PATENT ABSTRACTS OF JAPAN, vol. 12, no.**
**95 (P-681)[2942], 29 mars 1988; & JP-A-62 228**
**108 (SUMITOMO METAL IND. LTD) 07-10-1987**

(56) Documents cités :
**PATENT ABSTRACTS OF JAPAN, vol. 12, no.**
**62 (P-670)[2909], 25 février 1988; & JP-A-62 204**
**107 (KOBE STEEL LTD) 08-09-1987**
**PATENT ABSTRACTS OF JAPAN, vol. 11, no.**
**370 (P-642)[2817], 3 décembre 1987; & JP-A-62**
**140 010 (HITACHI CONSTR. MACH. CO. LTD)**
**23-06-1987**
**PATENT ABSTRACTS OF JAPAN, vol. 6, no.**
**258 (P-163)[1136], 17 décembre 1982; & JP-**
**A-57 154 009 (SUMITOMO KINZOKU KOGYO**
**K.K.) 22-09-1982**
**PATENT ABSTRACTS OF JAPAN, vol. 9, no.**
**285 (P-404)[2008], 12 novembre 1985; & JP-**
**A-60 125 513 (HITACHI SEISAKUSHO K.K.)**
**04-07-1985**

(73) Titulaire : **CEZUS Compagnie Européenne du**
**Zirconium**
**Tour Manhattan - La Défense 2 6, Place de**
**l'Iris**
**F-92400 Courbevoie (FR)**

(72) Inventeur : **Desruelles, Didier**
**14, Avenue Jean-Jaurès**
**F-73200 Albertville (FR)**
Inventeur : **Bodin, André**
**3, impasse de Bologne**
**F-49460 Montreuil Juigne (FR)**
Inventeur : **Moinard, Philippe**
**2, rue Anatole France**
**F-49460 Montreuil Juigne (FR)**

(74) Mandataire : **Séraphin, Léon et al**
**PECHINEY 28, rue de Bonnel**
**F-69433 Lyon Cedex 03 (FR)**

EP 0 335 808 B1

Jouve, 18, rue Saint-Denis, 75001 PARIS

# Description

L'invention concerne le contrôle non destructif de l'épaisseur du placage intérieur ou extérieur de tubes métalliques, et plus précisément un procédé et un dispositif de contrôle par ultrasons de cette épaisseur, ainsi que l'application de ce procédé à des tubes en alliage de Zr plaqué.

L'abrégé de la publication KOKAI JA-A-60142210 (Patent Abstracts of Japan) décrit un procédé de contrôle ultrasonore en immersion d'un tube en alliage de Zr plaqué intérieurement de Zr, au moyen d'un traducteur focalisant linéaire de fréquence 20 à 100 MHz, les intervalles de temps entre les échos d'entrée, d'interface et de fond étant mesurés.

On connaît également par JP-A-62204107 un dispositif de contrôle ultrasonore en immersion d'un tube en alliage de Zr plaqué avec deux traducteurs ultrasonores émetteur-réflecteur, ce dispositif comprenant des moyens de réglage indépendants entre eux des paramètres de distance et d'orientation de chaque traducteur par rapport à un tube à contrôler. Chaque traducteur est fixé sur un support à glissière qui comporte un moyen de réglage transversal et des moyens agissant sur l'inclinaison du traducteur par rapport à l'axe du tube. Le dispositif comprend aussi des moyens de suivi de la position des traducteurs par rapport à des tubes successifs de même type, et des moyens électroniques.

Dans le cas de tubes ébauches en alliage de Zr plaqués intérieurement de Zr non allié par voie métallurgique, destinés à être transformés en tubes de gainage, ces tubes ébauches ayant typiquement un diamètre extérieur compris entre 28 et 110 mm et un placage intérieur en Zr d'épaisseur comprise entre 0,5 et 2 mm, la détermination de l'épaisseur du placage par le dispositif précédent peut être gênée par des échos parasites. Un contrôle par courants de Foucault serait compliqué pour un contrôle en série et pas assez sensible pour les épaisseurs de placage dépassant 1 mm.

La demanderesse a essayé de trouver un moyen de contrôle échappant à de tels échos parasites et valable pour les tubes ébauches précédents.

## EXPOSE DE L'INVENTION

L'invention a pour premier objet un procédé de contrôle non destructif de l'épaisseur de placage d'un tube métallique, ledit placage ayant une épaisseur d'au moins 0,4 mm et ayant une impédance acoustique différant de celle de l'âme du tube à laquelle il est métallurgiquement lié d'au moins 1% relatif, le contrôle étant effectué par ultrasons en immersion au moyen d'un traducteur ou palpeur émetteur-récepteur de fréquence au moins égale à 4 MHz extérieur au tube après ajustement expérimental de la position de ce traducteur par rapport au tube.

Selon l'invention :

a) on choisit un traducteur bien amorti de fréquence principale de résonance comprise entre 4 et 20 MHz ;

b) on ajuste la position de ce traducteur par rapport au tube, en réglant séparément ses paramètres de distance et d'orientation, de façon à augmenter le rapport "signal/bruit" ;

c) on utilise pour la détermination de l'épaisseur de placage au moins un "écho double" ou un "écho triple" de l'interface placage/âme du tube, un tel "écho double" ou "triple" correspondant respectivement à deux ou trois trajets aller-retour des ultrasons d'ordres différents mais simultanés dans l'épaisseur dudit tube.

Le procédé ainsi mis au point convient aussi bien pour la détermination de l'épaisseur d'un placage extérieur que pour un placage intérieur. La liaison métallurgique du placage provient typiquement d'une application de ce placage sur l'âme du tube à chaud avec déformation, par exemple d'une coextrusion ou d'une application par pression en température, l'une ou l'autre application produisant au moins une très bonne adhérence du placage et de l'âme avec souvent une diffusion de profondeur faible, par exemple 0,1 µm. Les difficultés proviennent de trois aspects :

— lorsque la différence d'impédance acoustique est faible, par exemple de l'ordre de 2% relatif, ce qui correspond à la différence entre Zircaloy 2 et Zr non allié, le rapport des amplitudes onde réfléchie sur onde incidente qui, dans le cas d'une onde incidente perpendiculaire à l'interface est théoriquement de :

$$\frac{Z1 - Z2}{Z1 + Z2}$$

où Z1 et Z2 sont respectivement les impédances acoustiques des deux matériaux, se trouve être d'après cette formule de environ 1%. Il est alors problématique de faire ressortir un écho d'interface des parasites ou "herbes" ("grass") ;

— l'interface et les surfaces cylindriques intérieure et extérieure du tube sont sensiblement cylindriques, ce qui entraîne l'absence de réflexions vers le traducteur dès que les ondes incidentes s'écartent de la normalité par rapport à ces surfaces ;

— d'autre part, l'axe géométrique d'un traducteur ultrasonore peut différer de son axe acoustique et le champ acoustique qu'il émet n'est pas de révolution autour de cet axe.

Le procédé de l'invention repose sur trois types de mesures :

a) des mesures de choix du traducteur, un bon amortissement étant nécessaire pour que ses résonances secondaires ne viennent pas obscurcir la détection et l'oscillogramme, et sa fréquence principale étant choisie de façon à avoir une résolution adaptée ;

b) un réglage expérimental du traducteur, portant sur sa distance et ses paramètres d'orientation par rapport au tube. En effet, l'orientation de l'axe géométrique du traducteur perpendiculairement au tube et la fixation de sa distance au tube ou à l'interface en fonction des caractéristiques connues du traducteur se révèlent insuffisantes pour arriver à un bon rapport "signal sur bruit", c'est-à-dire à un oscillogramme clair où échos de fond et échos intermédiaires émergent de l'herbe. Dans ces essais, la demanderesse a déterminé qu'il fallait à la fois un traducteur bien choisi et un réglage complet "personnalisé" et le plus souvent itératif de la position exacte du traducteur pour obtenir un oscillogramme faisant ressortir des échos de fond et des échos de l'interface ;

c) enfin, on a constaté dans le cas d'un tube à placage intérieur que le premier écho (6) de l'interface (3) était peu utilisable en contrôle de série, son émergence de l'herbe étant irrégulière et insuffisante.

Il en est de même du second écho (16) de l'interface (3) correspondant à un aller-retour des ultrasons dans l'épaisseur entrecoupé par un aller-retour dans le placage intérieur.

On a remarqué dans ce même cas d'un tube à placage intérieur qu'il y avait un écho d'interface de hauteur pratiquement double (9), correspondant à deux trajets des ultrasons comprenant chacun un aller-retour de ces ultrasons dans l'épaisseur totale du tube, soit dans cet ordre, soit intervertis. L'écho d'interface qui en résulte, appelé ici "écho double d'interface", est ainsi la somme de deux échos correspondant à des trajets équivalents en temps, les mêmes épaisseurs d'âme et de placage y étant traversées, mais ayant une chronologie de réflexion-transmission différente. Il y a d'autres "échos doubles d'interface" correspondant chacun à deux trajets équivalents simultanés des ultrasons et de temps de parcours supérieur à celui du premier écho double d'interface. Il existe également des "échos triples d'interface" à partir du troisième aller-retour des ultrasons dans l'épaisseur du tube, intéressants dans certains cas.

Les plus intéressants des "échos doubles de l'interface", particulièrement lorsque la différence d'impédance acoustique est faible, par exemple comprise entre 1 et 15%, sont ceux qui correspondent à deux parcours équivalents des ultrasons ne comportant chacun qu'une seule réflexion sur l'interface. Ils permettent alors un contrôle répétitif de l'épaisseur du placage intérieur ou du placage extérieur d'un tube.

Lorsque la différence des impédances acoustiques du placage et de l'âme du tube est faible, il est important que le traducteur ultrasonore utilisé donne une impulsion d'énergie bien franche, avec une largeur à mi-hauteur de son spectre d'énergie en fonction de la fréquence au moins égale à 0,5 fois sa fréquence principale de résonance. Cette fréquence principale de résonance est de préférence comprise entre 8 et 16 MHz, et la largeur dudit spectre est dans tous les cas de préférence comprise entre 0,7 fois et 2 fois ladite fréquence principale de résonance.

Plus la différence des impédances acoustiques est faible et plus le diamètre de l'interface est faible, plus il est important d'avoir une forte concentration d'énergie ultrasonore et une bonne localisation de cette énergie au niveau de l'interface. Il est alors sinon indispensable, du moins souvent préférable, d'avoir un traducteur focalisant et mieux un traducteur "focalisant cylindrique", traducteur à surface libre cylindrique dont le faisceau acoustique s'effile en une zone focale étroite et allongée, aussi bien dans l'eau que dans la pièce contrôlée. Le réglage de position du traducteur vise alors à placer cette zone focale allongée selon une génératrice longitudinale de l'interface à détecter, ce qui permet de minimiser les pertes d'énergie ultrasonore par réflexions obliques sur cet interface et aussi d'améliorer le recouvrement ou la proximité des mesures voisines d'épaisseur de placage.

Comme on l'a déjà fait entrevoir, il faut en outre placer l'onde ultrasonore qui se propage dans le liquide d'immersion, typiquement de l'eau, puis dans la pièce, de façon que l'énergie réfléchie sur l'interface ainsi que sur les surfaces intérieure et extérieure du tube soit maximale, ce qui oblige à un réglage de position par essais successifs et paramètre par paramètre. De façon habituelle, avec un support approprié, c'est-à-dire permettant de maintenir une position fixe du traducteur par rapport au tube ou à la série de tubes contrôlés, on oriente le traducteur à peu près perpendiculairement à l'axe du tube, puis on règle sa distance par rapport au tube et on le déplace transversalement jusqu'à bien distinguer l'écho de fond, ou écho de la surface intérieure du tube. Après avoir éventuellement retouché un ou plusieurs de ces trois premiers paramètres pour obtenir ou améliorer la détection de cet écho de fond, on agit sur deux autres moyens de réglage du traducteur, commandant respectivement la rotation du traducteur autour de son propre axe, c'est-à-dire sa rotation sur lui-même, et l'inclinaison de ce traducteur selon le plan axial du tube passant par l'axe du traducteur ou selon un plan qui lui est parallèle. Il s'agit alors d'un réglage fin dans lequel les deux paramètres sont liés et correspondent schématiquement à l'orientation au mieux de l'axe acoustique du traducteur et de sa zone d'énergie la plus favorable, par exemple de sa zone focale, par rapport au tube et à son interface. Il peut être nécessaire de reprendre la mise au point en agissant sur une partie au moins des quatre réglages (distance, position transversale, position autour de son propre axe et inclinaison) jusqu'à ce qu'on obtienne au moins jusqu'au deuxième écho de fond à la fois des échos de fond et un ou plusieurs échos de l'interface comprenant au moins "un écho double d'interface".

Dans le cas du contrôle de l'épaisseur du placage intérieur d'un tube, on peut alors déterminer cette épaisseur de placage comme correspondant :

— soit à l'intervalle séparant le premier écho double d'interface, ou écho double d'interface du deuxième parcours des ultrasons, du second écho de fond, qui est dans ce cas l'intervalle entre deux échos successifs bien détachés, ce qui est particulièrement commode à prendre en compte électroniquement ;

— soit encore, pour améliorer la précision, au demi-intervalle séparant l'écho double d'interface du deuxième parcours du deuxième écho double d'interface, qui est le premier écho double d'interface du troisième parcours.

D'autres solutions sont possibles, par exemple d'utiliser l'écart entre deuxième écho de fond et deuxième écho double d'interface, mais au-delà on peut être gêné par les échos de réflexions multiples parasites.

Dans le cas du contrôle de l'épaisseur du placage extérieur, il existe aussi plusieurs solutions basées sur la prise en compte d'au moins un écho double d'interface, dont en premier la détermination de cette épaisseur de placage basée sur l'intervalle entre le premier écho de fond et le premier écho double d'interface.

Pour le contrôle en continu d'un tube ou d'une série de tubes, il est souhaitable de maintenir la position du traducteur ultrasonore rigoureusement constante par rapport aux portions de tubes à contrôler, et aussi de maintenir l'immersion malgré la succession des tubes, espacés ou à extrémités jointives, dans la cuve de contrôle. Pour obtenir ces résultats, on entraîne de préférence les tubes au travers d'une cuve d'immersion locale munie de sas d'entrée et de sortie, des détecteurs de proximité commandant l'ouverture et la fermeture des doubles ouvertures desdits sas de façon à maintenir l'immersion du traducteur et des portions du tube à contrôler, ce qui permet d'éviter toute attente entre deux tubes qui serait liée au contrôle ultrasonore ; par ailleurs, on appuie le support du traducteur de façon reproductible sur le tube en cours de contrôle ultrasonore, grâce à des moyens de contact appropriés typiquement roulants ou glissants portés par ledit support et on commande l'abaissement dudit support en position d'appui sur chaque tube ainsi que son relèvement, une fois le tube contrôlé et dégagé, au moyen de détecteurs qui repèrent le passage des extrémités des tubes. L'ensemble de ces dispositions permet le maintien de la qualité du contrôle ultrasonore de l'épaisseur de placage pour une série de tubes d'un même lot et pour des lots différents, et de même géométrie, les longueurs individuelles des tubes pouvant dans tous les cas varier fortement, et elles entraînent avec la réduction au minimum des temps de contrôle ultrasonore une forte réduction des interventions des opérateurs.

L'invention a pour deuxième objet le dispositif de contrôle ultrasonore qu'on doit nécessairement utiliser pour mettre en oeuvre le procédé de l'invention. Ce dispositif permettant le contrôle ultrasonore en immersion d'un tube métallique plaqué comporte un traducteur utilisé en émission-réflexion, ledit dispositif comprenant des moyens de réglage indépendants entre eux des paramètres de distance et d'orientation dudit traducteur par rapport au tube à contrôler, ledit traducteur étant fixé sur un support à glissière comportant un moyen de réglage de sa position transversale et des moyens de commande de sa rotation, ledit dispositif comprenant aussi des moyens de suivi de la position dudit traducteur pour des tubes sucessifs de même type et des moyens électroniques, comme cela est connu par JP-A-62204107. Selon l'invention :

a) lesdits moyens de commande de la rotation du traducteur comprennent des moyens de commande de sa rotation autour de son propre axe, et un moyen de réglage de son inclinaison par rapport audit tube à contrôler, ces moyens de commande et de réglage permettant ensemble d'orienter au mieux l'axe acoustique du traducteur et sa zone d'énergie la plus favorable par rapport audit tube et à son interface ;

b) ledit support à glissière est fixé de façon réglable en rotation autour d'un axe transversal sur une pièce réglable en position par rapport à des montants soumis à l'action d'un vérin relié à un point fixe, ces montants portant des pièces d'appui du support du traducteur sur le tube à contrôler par des moyens glissants ou roulants, par exemple des billes ou des galets rotatifs, et lesdits montants coulissant à travers une pièce supérieure pouvant tourner autour d'un axe parallèle à l'axe longitudinal des tubes de façon à conserver le suivi du traducteur lorsque ces tubes sont fléchés.

c) ledit traducteur est bien amorti et de fréquence principale de résonance comprise entre 4 et 20 MHz, et lesdits moyens électroniques auxquels il est relié comprennent un émetteur et un récepteur à large bande de fréquence avec un amplificateur de gain au moins égal à 80 db ;

l'ensemble des moyens ci-dessus permettant l'obtention et la détection d'au moins un écho double de l'interface placage/âme du tube le long d'un ou plusieurs tubes d'un même lot.

Selon une disposition avantageuse, ces moyens de réglage font partie d'une pièce-support comprenant : un support à glissière du traducteur comportant un moyen de réglage de la position transversale dudit traducteur et un moyen de commande de sa rotation autour de son propre axe, ce support à glissière étant lui-même fixé de façon réglable en rotation autour d'un axe transversal sur une pièce réglable en position par rapport à des montants soumis à l'action d'un vérin relié à un point fixe.

Les moyens de suivi des tubes comportent de préférence aussi une possibilité de rotation de la pièce-support autour d'un axe fixe parallèle à l'axe longitudinal des tubes, par l'intermédiaire de ladite pièce supérieure dans laquelle coulissent les montants, de position habituellement intermédiaire entre la pièce réglable solidaire du support à glissière du traducteur et le vérin d'appui. La combinaison de l'appui de la pièce support par le vérin et de cette possibilité de rotation permet de suivre les flèches des tubes, typiquement inférieures à 5 mm/m, quelle que soit leur orientation.

Pour le cas où on utilise une cuve d'immersion locale que traversent les tubes, deux moyens supplémentaires permettant le contrôle en continu d'une série de tubes en succession automatique, en évitant toute intervention par un opérateur et des attentes liées à l'impératif d'immersion du tube à contrôler et du traducteur, seront décrits dans l'exemple.

Un troisième objet de l'invention est l'application du procédé de contrôle décrit au contrôle ultrasonore de placage intérieur ou extérieur de tube(s) en alliage de Zr plaqué de Zr non allié ou d'un autre alliage de Zr, pourvu que la différence d'impédance acoustique des deux métaux ou alliages considérés soit d'au moins 0,8% relatif, et cette différence étant en général comprise entre 1 et 4% relatif.

On peut contrôler ainsi l'épaisseur de placage intérieur de tube(s) en Zircaloy 2 ou 4 plaqués intérieurement de Zr non allié.

Dans le cas des tubes "Triplex", ayant par exemple un placage intérieur en Zr non allié, une âme en Zircaloy et un placage extérieur en Zr-Fe 0,12 à 0,24%-V 0,13 à 0,3%-Sn et Nb inférieurs chacun à 0,15%, ce placage extérieur ayant une résistance remarquable aussi bien à la corrosion uniforme qu'à la corrosion nodulaire, on peut contrôler successivement les épaisseurs de ces deux placages, avec un réglage de position du traducteur particulier à chaque cas.

Cette indication s'applique aux tubes à deux placages, intérieur et extérieur, des autres métaux ou alliages.

**EXEMPLE**

La figure 1 représente les trajets des ultrasons dans un tube à placage intérieur, selon une section droite du tube.
La figure 2 représente les échos correspondants sur l'oscillogramme.
La figure 3 représente les trajets des ultrasons dans un tube à placage extérieur, et la figure 4 les échos correspondants sur l'oscillogramme.
La figure 5 représente le spectre de fréquence du traducteur ultrasonore utilisé.
La figure 6 représente le champ acoustique du même traducteur, en perspective cavalière.
La figure 7 est un schéma de disposition générale du banc de contrôle utilisé.
La figure 8 représente la pièce-support du traducteur, en perspective cavalière.
La figure 9 est un oscillogramme extrait du contrôle d'une série de tubes.

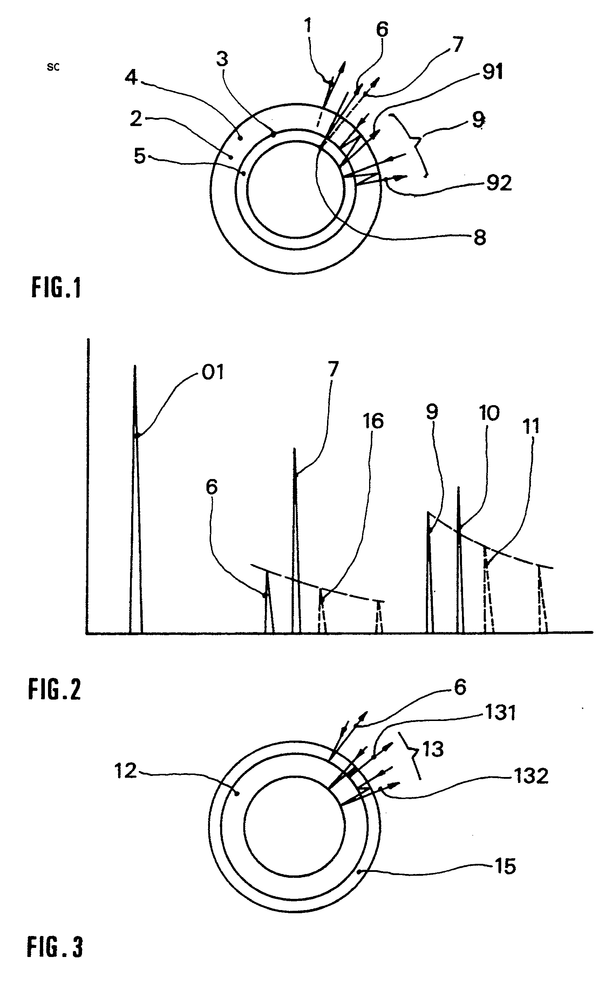

1/ Principe de contrôle ultrasonore utilisé (fig. 1 à 4)

L'onde ultrasonore 1 normale à la surface du tube 2 (fig. 1) se réfléchit partiellement sur cette surface en donnant un écho de départ 01, se propage dans ce tube selon une direction perpendiculaire à l'interface 3 de l'âme 4 et du placage 5 et se réfléchit partiellement sur cet interface 3 et se transmet partiellement dans le placage 5. On obtient ainsi à partir de cette première réflexion sur l'interface 5 un retour direct 6 vers le traducteur donnant le premier écho 6 de l'interface 3 sur l'oscillogramme (schéma de la fig. 2), situé avant le premier écho de fond 7 ou écho de réflexion directe sur la surface intérieure du tube 8. Cet écho d'interface 6 est situé à une distance de l'écho de fond 7 correspondant à l'épaisseur du placage 5, mais dans le cas où l'âme et le placage ont des impédances acoustiques voisines, il n'est pas utilisable pour du contrôle en continu ou en série car il a une amplitude relativement faible et la zone précédant le premier écho de fond 7 est souvent perturbée par des résonances et échos parasites.

On a constaté que parmi les échos suivants provenant de l'interface 3, il y avait un écho 9, situé avant le deuxième écho de fond 10, qui était particulièrement intéressant : par sa hauteur pratiquement double de celle du premier écho d'interface 6, et parce que en outre, il se trouve dans une zone moins perturbée de la détection. L'interprétation est la suivante: une portion de l'énergie acoustique réfléchie sur l'interface se réfléchit à nouveau dans l'épaisseur complète du tube, ce qui donne un écho 91 dont la situation rend compte de 2 parcours dans l'épaisseur totale du tube moins un aller-retour dans l'épaisseur du placage.

Un parcours différent mais équivalent en temps de parcours dans le tube 2 est obtenu par réflexion sur la surface intérieure 8 du tube 2 et retour 92 vers le traducteur interrompu, par deux réflexions respectivement sur l'intérieur de la surface extérieure du tube 2 et sur l'interface 3, c'est-à-dire par un aller-retour dans l'épaisseur de l'âme 4. Ces deux parcours de durées équivalentes se produisent, de sorte que l'écho 9 situé à une épaisseur de placage avant le deuxième écho de fond 10 est la somme des deux retours d'énergie ou échos simultanés 91 et 92. Avec les réflexions et transmissions suivantes, on obtient d'autres "échos doubles d'interface" utilisables pour le contrôle, en particulier l'écho double 11 de la figure 2 correspondant à deux parcours équivalents des ultrasons comprenant chacun deux aller-retours dans l'épaisseur totale du tube 2 et un aller-retour dans l'épaisseur du placage 5, et situé à "une épaisseur du placage" après le deuxième écho de fond 10, écho 11 dont un intérêt important est la possibilité d'une mesure directe du double de l'épaisseur du placage 5 entre les échos doubles d'interface 9 et 11, améliorant la précision d'estimation de cette épaisseur.

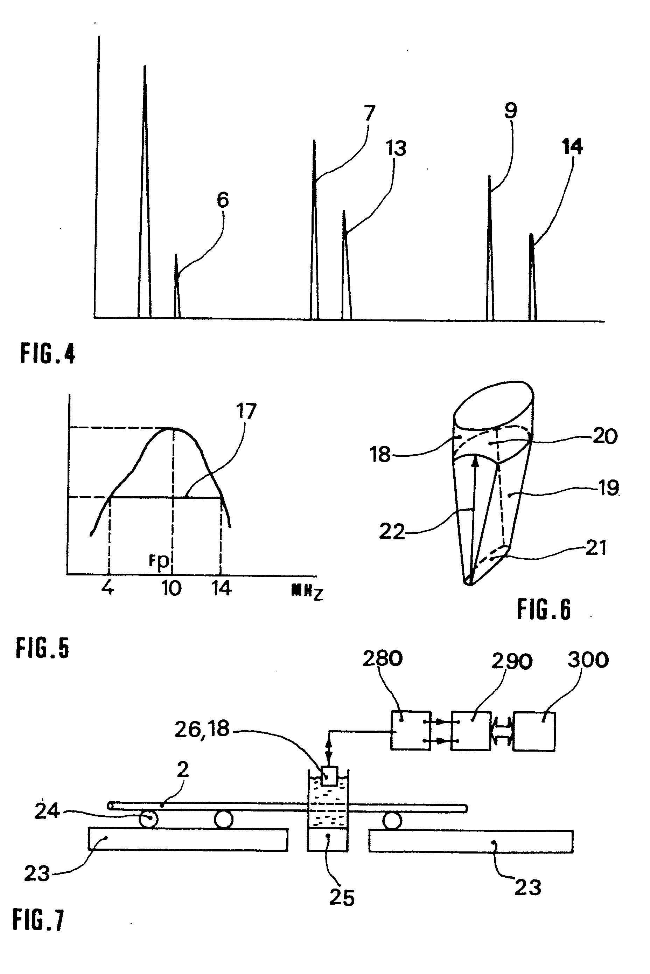

Des phénomènes semblables se produisent au contrôle ultrasonore d'un tube 12 plaqué extérieurement (fig. 3 et 4) et on obtient ainsi, au-delà du premier écho d'interface 6 et du premier écho de fond 7, un premier écho double d'interface 13 qui est la somme de deux parcours équivalents en temps 131 et 132, comprenant chacun un aller-retour dans l'épaisseur du tube 12 et un aller-retour dans son placage extérieur 15.

L'écho triple suivant 14 résulte de trois parcours simultanés à une seule réflexion sur l'interface comprenant chacun deux aller-retours dans l'épaisseur du tube 12 et un aller-retour dans l'âme ou couche intérieure du tube, cet écho 14 est situé à "une épaisseur de placage" après le deuxième écho de fond 9.

### 2/ Tubes plaqués contrôlés

Il s'agissait d'un lot de tubes en Zircaloy 2 plaqués intérieurement de Zr non allié. Le placage a été réalisé par coextrusion à 650°C, les ébauches composites filées obtenues ont été réduites par laminage à froid et recuites après laminage. Les dimensions étaient :
Ø extérieur 63,5 mm × épaisseur totale 10,9 mm avec une épaisseur de placage moyenne de 1,5 mm ; longueur moyenne 5 m (longueurs individuelles allant de 1,5 m à 6 m).

### 3/ Matériel de contrôle

#### 3.1) Traducteur ultrasonore choisi

C'était un traducteur 18 de fréquence principale Fp = 10 MHz, focalisant cylindrique et de diamètre de traducteur 1/2″ = 12,7 mm. Ce traducteur bien amorti avait une largeur 17 à mi-hauteur de son spectre de fréquence, ou diagramme d'énergie ou amplitude du signal transmis en fonction de la fréquence de vibration (fig. 5), de 10 MHz c'est-à-dire de même valeur que sa fréquence principale Fp. La figure 6 schématise la structure du traducteur focalisant cylindrique 18 et la forme de son impulsion acoustique 19, la surface libre 20 de cette pastille 18 étant cylindrique et l'impulsion 19 s'effilant et se concentrant selon une zone focale 21 étroite et allongée, parallèle aux génératrices rectilignes de la face 20. La distance focale 22 est ici de 40,6 mm dans l'eau, les largeur et longueur de la zone focale étant d'environ 0,5 × 3 mm.

#### 3.2) Dispositif de contrôle

Il comprend (fig. 7) un banc 23 d'approvisionnement et de dégagement des tubes 2 amenés par un plan incliné puis mis en rotation sur une ligne de couples de galets 24 inclinés pour régler le pas et donc l'avance. Les tubes 2 du lot contrôlé sont ici entraînés avec une vitesse de rotation sur eux-mêmes de 250 tours/min et une avance de 1 m/min, chaque point de leur surface décrivant une hélice de pas 4 mm. Les défauts de rectitude des tubes sont faibles, les flèches étant toutes inférieures à 1,5 mm par mètre. Les tubes sont ainsi poussés à travers une cuve d'immersion locale 25, remplie d'eau par le bas. Cette cuve 25 comporte un sas d'entrée des tubes et un sas de sortie, non représentés, comprenant chacun un couvercle ou opercule extérieur, recouvrant l'ouverture extérieure de passage par pivotement ou dégageant cette ouverture de même sous l'effet de détecteurs de proximité inductifs des tubes, et une paroi, ou diaphragme d'étanchéité intérieur coulissant, fermant ou libérant l'ouverture intérieure de passage suivant ou précédant ladite ouverture extérieure, également sous l'effet de détecteurs de position.

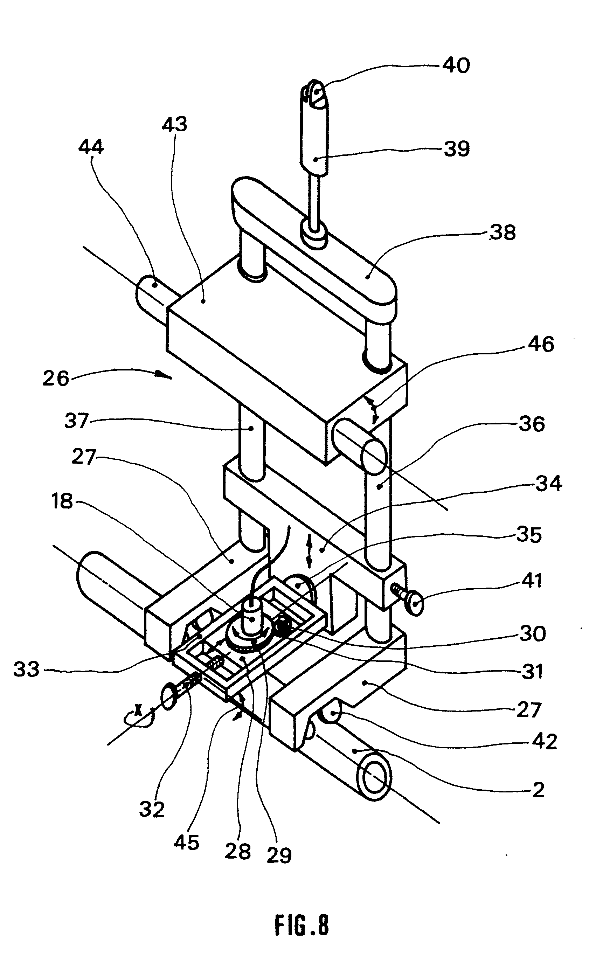

Lorsqu'un tube 2 a pénétré dans la cuve d'immersion 25 et qu'il arrive au voisinage de la position centrale de contrôle, la pièce-support 26 du traducteur 18 s'abaisse automatiquement sous l'effet de détecteurs de proximité immergés, ses moyens d'appui 27 (fig. 8) venant au contact du tube 2 et le traducteur 18 retrouve exactement sa position précédente ou position de réglage par rapport au tube 2. La pièce-support 26 se relève de même dès le contrôle terminé.

Le traducteur émetteur-récepteur 18 est relié à des moyens électroniques 280 comprenant un émetteur et un récepteur à large bande de fréquence, avec un amplificateur à fort gain (au moins 80 db), un système de détection de crête et un dispositif de correction du gain en fonction de la distance. Il y a ensuite des moyens de traitement automatique des résultats, comprenant des moyens 290 de conversion analogique-numérique rapide et des moyens 300 de traitement et de visualisation des résultats.

#### 3.3.) Moyens de réglage et de suivi du traducteur

La pièce-support 26 (fig. 8) comporte un support 28 glissant à l'intérieur d'un cadre 33, sur lequel est fixé le traducteur 18 par l'intermédiaire d'un disque 29 à bord cranté pouvant être en rotation par une vis 30 solidaire d'une seconde pièce crantée 31, cette rotation du disque 29 permettant de régler la position de ce traducteur en rotation sur lui-même. Une vis 32 traversant l'avant du cadre 33 sert au réglage de la position transversale du support 28 et donc du traducteur 18. L'arrière du cadre 33 est fixé sur une pièce verticale en Té 34 par l'intermédiaire d'un disque 35 appuyé sur la face du Té et pouvant tourner autour d'un axe X perpendiculaire à l'axe du traducteur 18 et à ladite face du Té, cet axe X étant parallèle à la direction de glissement transversal du support 28. Le moyen de blocage en rotation du disque 35 et le levier d'entraînement en rotation du support à glissière 28 et 32 autour de l'axe X ne sont pas représentés.

La pièce en Té 34 coulisse le long de deux tiges ou colonnes sensiblement verticales 36 et 37, dont les extrémités supérieures sont emboîtées par une traverse 38 à laquelle est fixée la tige d'un vérin hydraulique 39 de suspension et de poussée, ce vérin 39 étant accroché à un point fixe 40. La pièce en Té 34 peut être bloquée sur les colonnes 36 et 37 par deux vis telles que 41, la hauteur du traducteur 18 au-dessus du tube 2 à contrôler étant ainsi réglée.

Les colonnes 36 et 37 portent à leurs extrémités inférieures deux pièces d'appui transversales 27, venant chacune chevaucher le tube 2 par une encoche inférieure en V munie de deux petits galets 42 en téflon libres de tourner sur eux-mêmes. Ces pièces d'appui 27, et donc les galets 42, peuvent être orientés comme les galets 24 extérieurs à la cuve 25, ce qui facilite la progression des tubes 2 et évite ou limite le frottement et l'usure des galets 42.

Les moyens de suivi comprennent, en plus des pièces d'appui 27 et 42 mises en pression par le vérin 39, une plaque supérieure 43 libre de rotation autour d'un axe longitudinal 44, les montants ou colonnes 36 et 37 traversant de façon coulissante l'arrière de cette plaque supérieure 43.

Le support à glissière 28 et 33 du traducteur 18 peut par suite tourner légèrement comme la plaque 43, comme représenté par les doubles flèches 45 et 46, améliorant le suivi des tubes légèrement fléchés.

### 4/ Conditions de contrôle et résultats

Le réglage de la position du traducteur 18 a été fait selon la méthode expérimentale déjà décrite.

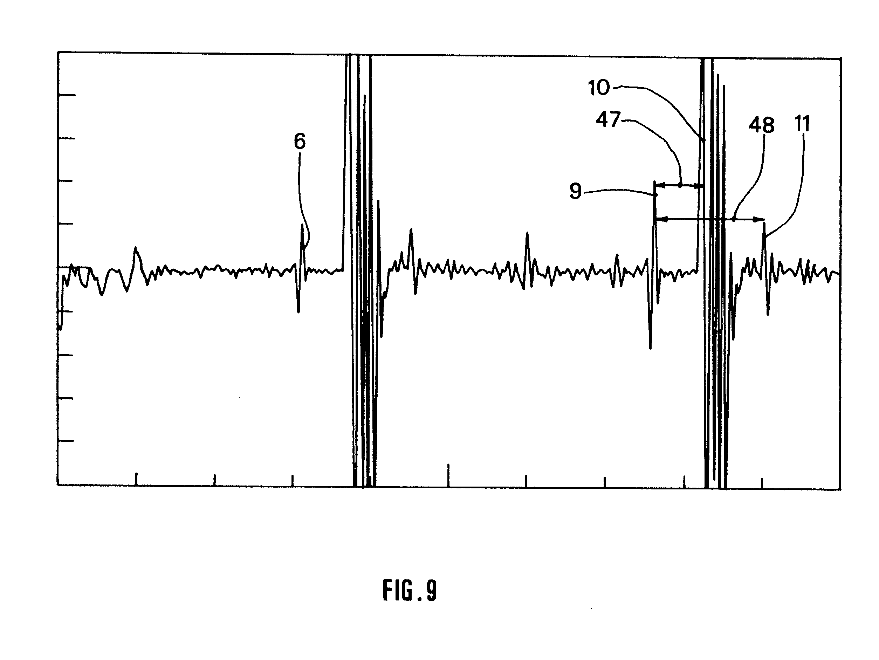

Le traducteur était excité à la fréquence de 1 kHz, il y avait donc 240 mesures par tour d'hélice. La position de l'écho double d'interface 9 et du deuxième écho de fond 10 (fig. 2 et fig. 9) étaient enregistrées et le temps 47 compris entre ces deux échos 9 et 10 était converti en épaisseur.

Sur la figure 9 qui montre un oscillogramme réel de ce contrôle, on a repéré avec le premier écho d'interface 6, difficilement utilisable en série, les échos doubles d'interface 9 et 11, ainsi que le temps 47 séparant les échos 9 et 10, représentant l'épaisseur du placage intérieur et le temps double 48 séparant le premier écho double 9 du deuxième écho double d'interface 11.

Les valeurs d'épaisseur de placage correspondant à chaque tour d'hélice étaient traitées statistiquement et enregistrées, et les positions des portions de tubes dont l'épaisseur de placage était hors tolérance étaient repérées pour chutage ultérieur.

La précision de la mesure d'épaisseur de placage ainsi réalisée était de ± 3 µm.

Quelques mesures aberrantes, soit 5 à 15 mesures par tour d'hélice représentant 240 mesures n'étaient pas prises en compte. Ces mesures aberrantes correspondent surtout à des anomalies de réflexion de l'interface.

## AVANTAGES DE L'INVENTION

— Elle permet des mesures ultrasonores précises de l'épaisseur de placage intérieur ou extérieur de tube plaqué, malgré une différence d'impédance acoustique très faible ;

— ce contrôle est réalisé par l'extérieur et en continu, ce qui est avantageux pour la série et l'automatisation ;

— le dispositif permet un réglage reproductible, sans besoin de reprise entre tubes d'une même série ou de lots de même composition et de même géométrie ;

— ce contrôle ultrasonore permet un chutage précis des portions de tubes dont l'épaisseur de placage est hors tolérances, par exemple correspondant aux débuts d'extrusion, ce qui entraîne une sécurité de qualité et une économie de matière importantes.

### Revendications

1. Procédé de contrôle non destructif de l'épaisseur d'un placage (5 ; 15) d'un tube métallique (2 ; 12), ledit placage (5 ; 15) ayant une épaisseur d'au moins 0,4 mm et ayant une impédance acoustique différant de celle de l'âme (4) du tube (2 ; 12) à laquelle il est métallurgiquement lié d'au moins 1% relatif, le contrôle étant effectué par ultrasons en immersion au moyen d'un traducteur émetteur-récepteur (18) de fréquence au moins égale à 4 MHz extérieur audit tube (2 ; 12), après ajustement expérimental de la position dudit traducteur (18) par rapport au tube (2 ; 12), caractérisé en ce que :

a) on choisit un traducteur (18) bien amorti de fréquence principale de résonance comprise entre 4 et 20 MHz ;

b) on ajuste la position de ce traducteur (18) par rapport au tube (2), en réglant séparément ses paramètres de distance et d'orientation, de façon à augmenter le rapport "signal/bruit" ;

c) on utilise pour la détermination de l'épaisseur de placage (5 ; 15) au moins un "écho double" (9 ;

11 ; 13) ou un "écho triple" (14) de l'interface (8) placage/âme du tube (2 ; 12), un tel "écho double" ou "triple" correspondant respectivement à deux ou trois trajets aller-retour des ultrasons d'ordres différents mais simultanés dans l'épaisseur dudit tube (2 ; 12).

2. Procédé selon la revendication 1, dans lequel le traducteur (18) a un spectre d'énergie en fonction de la fréquence ayant une largeur (17) à mi-hauteur de ce spectre au moins égale à 0,5 fois sa fréquence principale (Fp) de résonance.

3. Procédé selon la revendication 2, dans lequel ledit traducteur (18) a une fréquence principale (Fp) de résonance comprise entre 8 et 16 MHz et a un spectre d'énergie en fonction de la fréquence de largeur (17) à mi-hauteur de ce spectre comprise entre 0,7 fois et 2 fois ladite fréquence principale (Fp) de résonance.

4. Procédé selon l'une quelconque des revendications 2 ou 3, dans lequel ledit traducteur ultrasonore (18) est du type focalisant cylindrique, et en ce qu'on dispose le traducteur (18) par rapport au tube (2) de sorte que sa tache focale (21) soit orientée dans le sens longitudinal dudit tube (2).

5. Procédé selon la revendication 1, dans lequel on ajuste la position du traducteur (18) par rapport au tube à contrôler selon les étapes principales suivantes :

a1) à l'aide d'un support approprié (26), on oriente le traducteur à peu près perpendiculairement à l'axe du tube (2), puis on règle sa distance par rapport au tube (2) et on le déplace transversalement de façon à bien distinguer l'écho de fond (7) ;

b1) on agit ensuite sur un moyen de réglage (30 et 31 et 29) de la rotation du traducteur (18) autour de son axe et sur l'inclinaison de ce traducteur (18) par rapport à l'axe du tube (2) ;

c1) et on recommence en agissant sur une partie au moins des quatre réglages (a1) et (b1) de façon à augmenter le rapport "signal/bruit" et à obtenir sur les deux premiers parcours des ultrasons dans la paroi du tube (2) à la fois des échos de fond (7, 10) et un ou plusieurs échos (9, 11) de l'interface (8).

6. Procédé selon l'une quelconque des revendications 1 à 5, dans lequel ledit écho double (9, 11) de l'interface (8) correspond à deux parcours équivalents des ultrasons ne comportant chacun qu'une seule réflexion sur l'interface (8).

7. Procédé selon la revendication 6 dans lequel on détermine l'épaisseur du placage intérieur (5) d'un tube (2) comme correspondant à l'intervalle (47) séparant l'écho double d'interface (9) du deuxième parcours des ultrasons du deuxième écho de fond (10).

8. Procédé selon la revendication 6, dans lequel on détermine l'épaisseur du placage intérieur (5) d'un tube (2) comme correspondant à la moitié de l'intervalle (48) qui sépare l'écho double d'interface (9) du deuxième parcours du premier écho double d'interface (11) du troisième parcours.

9. Procédé selon la revendication 6 dans lequel on détermine l'épaisseur du placage extérieur (15) d'un tube (12) comme correspondant à l'intervalle séparant le premier écho de fond (7) de l'écho double d'interface (13) du deuxième parcours des ultrasons.

10. Procédé selon la revendication 1, dans lequel on entraîne les tubes (2) au travers d'une cuve (25) d'immersion locale munie de sas d'entrée et de sortie, des détecteurs de proximité commandant l'ouverture et la fermeture desdits sas, de façon à maintenir l'immersion du traducteur (18) et des tubes (2), dans lequel on appuie le support (26) du traducteur (18) de façon reproductible sur le tube (2) en cours de contrôle par ultrasons, ledit support (26) portant ledit tube (2) par des moyens de contact (42) appropriés et dans lequel on commande l'abaissement dudit support (26) en position d'appui sur chaque tube (2) ainsi que son relèvement après dégagement du tube (2) au moyen de détecteurs qui repèrent le passage des extrémités des tubes (2).

11. Dispositif de contrôle ultrasonore en immersion de l'épaisseur de placage d'un tube métallique plaqué (2, 12) comportant un traducteur ultrasonore (18) utilisé en émission-réflexion, ledit dispositif comprenant des moyens de réglage (34 et 41 ; 32, 28 et 33 ; 29 et 30 et 31 ; 33 et 35) indépendants entre eux des paramètres de distance et d'orientation dudit traducteur (18) par rapport audit tube (2, 12) à contrôler, ledit traducteur (18) étant fixé sur un support à glissière (28 et 33) comportant un moyen de réglage (32) de sa position transversale et des moyens de commande (29 et 30 et 31, 33 et 35) de sa rotation, ledit dispositif comprenant aussi des moyens de suivi (27 et 42 ; 36 ; 37 ; et 43, 44) de la position dudit traducteur (18) pour des tubes successifs (2) de même type et des moyens électroniques (280) caractérisé en ce que :

a) lesdits moyens de commande (29 et 30 et 31) de la rotation du traducteur (18) comprennent des moyens de commande (29 et 30 et 31) de sa rotation autour de son propre axe, et un moyen de réglage (33 et 35) de son inclinaison par rapport audit tube (2) à contrôler, ces moyens de commande (29 et 30 et 31) et de réglage (33 et 35) permettant ensemble d'orienter au mieux l'axe acoustique du traducteur (18) et sa zone d'énergie la plus favorable par rapport audit tube (2) et à son interface (3) ;

b) ledit support à glissière (33) est fixé de façon réglable en rotation autour d'un axe transversal (X) sur une pièce (34) réglable en position par rapport à des montants (36 et 37) soumis à l'action d'un vérin (39) relié à un point fixe (40), ces montants (36 et 37) portant des pièces d'appui (27) du support (26) du traducteur (18) sur le tube (2) à contrôler par des moyens glissants ou roulants (42), par exemple des billes ou des galets rotatifs (42), et lesdits montants (36 et 37) coulissant à travers une pièce supérieure (43) pouvant tourner autour d'un axe (44) parallèle à l'axe longitudinal des tubes (2) de façon à conserver le suivi du traducteur (18) lorsque ces tubes (2) sont fléchés ;

c) ledit traducteur (18) est bien amorti et de fréquence principale de résonance comprise entre 4 et 20 MHz, et lesdits moyens électroniques (280) auxquels il est relié comprennent un émetteur et un récepteur à large bande de fréquence avec un amplificateur de gain au moins égal à 80 db ;

l'ensemble des moyens ci-dessus permettant l'obtention et la détection d'au moins un écho double de l'interface placage/âme du tube (2) le long d'un ou plusieurs tubes d'un même lot.

12. Dispositif selon la revendication 11, muni d'une cuve à immersion (25) du traducteur (18) et de la portion de tube (2) en cours de contrôle dans lequel des détecteurs de proximité détectent le passage des extrémités des tubes (2) et commandent la mise en appui dudit support (26) du traducteur (18) sur chaque tube (2) et son relèvement après dégagement de ce tube (2).

13. Dispositif selon la revendication 12, dans lequel la cuve à immersion (25) comporte des sas d'entrée et de sortie des tubes (2), chaque sas comportant un couvercle mobile extérieur et une double paroi mobile intérieure dont les mouvements sont commandés par des détecteurs de proximité détectant le passage des extrémités de tubes (2), de façon à maintenir l'immersion des tubes (2) successifs.

14. Application du procédé de l'une quelconque des revendications 1 à 10 au contrôle ultrasonore de l'épaisseur du placage intérieur (5) ou extérieur (15) d'un ou plusieurs tubes (2 ; 12) en alliage de zirconium plaqué de zirconium non allié ou d'un autre alliage de zirconium, le diamètre extérieur du ou des tubes (2 ; 12) étant compris entre 28 mm et 110 mm et l'épaisseur du placage considéré étant comprise entre 0,4 mm et 0,5 fois l'épaisseur totale du ou desdits tubes (2 ; 12).

15. Application selon la revendication 14 au contrôle de l'épaisseur du placage intérieur (5) d'un ou plusieurs tubes (2) en Zircaloy 2 ou 4 plaqués intérieurement de Zr non allié.

## Patentansprüche

1. Verfahren zur nicht zerstörenden Prüfung der Dicke einer Plattierung (5 ; 15) eines Metallrohrs (2 ; 12), wobei die Plattierung (5 ; 15) eine Dicke von wenigstens 0,4 mm besitzt und eine von derjenigen des Kerns (4) des Rohrs (2 ; 12), mit dem sie metallurgisch verbunden ist, verschiedene Schallimpedanz von wenigstens 1 Relativ-% aufweist, wobei die Prüfung mit Ultraschall durch Eintauchen mittels eines Sender-Empfänger-Umsetzers (18) bei einer Frequenz von wenigstens gleich 4 MHz außerhalb des Rohrs (2 ; 12) ausgeführt wird, nachdem die Position des Umsetzers (18) in bezug auf das Rohr (2 ; 12) experimentell eingestellt worden ist, dadurch gekennzeichnet, daß :

a) ein gut gedämpfter Umsetzer (18) mit einer Hauptresonanzfrequenz zwischen 4 und 20 MHz gewählt wird ;

b) die Position dieses Umsetzers (18) in bezug auf das Rohr (2) eingestellt wird, indem seine Abstands- und Orientierungsparameter getrennt so geregelt werden, daß das "Signal/Rausch"-Verhältnis verstärkt wird ;

c) für die Bestimmung der Dicke der Plattierung (5 ; 15) wenigstens ein "Doppelecho" (9 ; 11 ; 13) oder ein "Dreifachecho" (14) der Grenzfläche (8) Plattierung/Rohrkern (2 ; 12) verwendet wird, wobei ein solches "Doppel-" oder "Dreifachecho" zwei bzw. drei Hin- und Rückläufen des Ultraschalls durch die Dicke des Rohrs (2 ; 12) in verschiedenen, aber gleichzeitigen Abfolgen entspricht.

2. Verfahren gemäß Anspruch 1, in dem der Umsetzer (18) ein frequenzabhängiges Energiespektrum besitzt, wobei die Halbhöhenbreite (17) dieses Spektrums wenigstens gleich dem 0,5-fachen seiner Hauptresonanzfrequenz (Fp) ist.

3. Verfahren gemäß Anspruch 2, in dem der Umsetzer (18) eine Hauptresonanzfrequenz (Fp) zwischen 8 und 16 MHz besitzt und ein frequenzabhängiges Spektrum besitzt, wobei die Halbhöhenbreite (17) dieses Spektrums zwischen dem 0,7-fachen und dem 2-fachen der Hauptresonanzfrequenz (Fp) liegt.

4. Verfahren gemäß einem der Ansprüche 2 oder 3, in dem der Ultraschall-Umsetzer (18) von einem zylindrisch-fokussierenden Typ ist, und in dem der Umsetzer (18) in bezug auf das Rohr (1) so angeordnet wird, daß sein Brennpunkt (21) in Längsrichtung des Rohrs (2) orientiert ist.

5. Verfahren gemäß Anspruch 1, in dem die Position des Umsetzers (18) in bezug auf das Rohr eingestellt wird, um die Prüfung gemäß den folgenden Hauptschritten auszuführen :

a1) Mit Hilfe eines geeigneten Trägers (26) wird der Umsetzer im wesentlichen senkrecht zur Mittelachse des Rohr (2) orientiert, dann wird sein Abstand in bezug auf das Rohr (2) eingestellt und er transversal so verschoben, daß das Rückwandecho (7) gut unterscheidbar ist ;

b1) anschließend wird auf ein Mittel zum Einstellen (30 und 31 und 29) der Drehung des Umsetzers (18) um seine Mittelachse und auf die Neigung dieses Umsetzers (18) in bezug auf die Mittelachse des Rohrs (2) eingewirkt ;

c1) und es wird mit dem Einwirken auf einen Teil von wenigstens vier Einstellungen (a1) und (b1) so eingewirkt, daß das "Signal/Rausch"-Verhältnis verstärkt wird und daß in den zwei ersten Durchläufen des Ultraschalls in der Wand der Rohrs (2) gleichzeitig die Rückwandechos (7, 10) und ein oder mehrere Echos (9, 11) der Grenzfläche (8) erhalten werden.

6. Verfahren gemäß einem der Ansprüche 1 bis 5, in dem das Doppelecho (9, 11) der Grenzfläche (8) zwei äquivalenten Durchläufen des Ultraschalls, die jeweils nur eine einzige Reflexion an der Grenzfläche (8) enthalten, entspricht.

7. Verfahren gemäß Anspruch 6, in dem die Dicke der inneren Plattierung (5) eines Rohrs (2) entsprechend dem Intervall (27), das das Grenzflächen-Doppelecho (9) des zweiten Durchlaufs des Ultraschalls vom Rückwandecho (10) trennt, bestimmt wird.

8. Verfahren gemäß Anspruch 6, in dem die Dicke der inneren Plattierung (5) eines Rohrs (2) entsprechend dem halben Intervall (48), das das Grenzflächen-Doppelecho (9) des zweiten Durchlaufs vom ersten Grenzflächen-Doppelecho (11) des dritten Durchlaufs trennt, bestimmt wird.

9. Verfahren gemäß Anspruch 6, in dem die Dicke der äußeren Plattierung (15) eines Rohrs (12) entsprechend dem Intervall, das das erste Rückwandecho (7) vom Grenzflächen-Doppelecho (13) des zweiten Durchlaufs des Ultraschalls trennt, bestimmt wird.

10. Verfahren gemäß Anspruch 1, in dem die Rohre (2) durch einen mit einer Eingangs- und einer Ausgangsschleuse versehenen lokalen Tauchbehälter (25) bewegt werden, wobei berührungslose Taster die Öffnung und die Schließung der Schleusen steuern, derart, daß die Eintauchung des Umsetzers (18) und der Rohre (2) erhalten bleibt, in dem der Träger (26) des Umsetzers (18) im Verlauf der Ultraschallprüfung auf dem Rohr (2) auf reproduzierbare Weise abgestützt wird, wobei der Träger (26) das Rohr (2) mittels geeigneter Kontaktmittel (42) trägt, und in dem das Absenken des Trägers (26) in die Position der Abstützung auf dem Rohr (2) sowie sein Hochheben nach der Ablösung vom Rohr (2) mittels Detektoren gesteuert wird, die den Durchgang der Enden der Rohre (2) angeben.

11. Vorrichtung zur Eintauch-Ultraschallprüfung der Dicke der Plattierung eines plattierten Metallrohrs (2, 12), mit einem Ultraschall-Umsetzer (18), der in Emission-Reflexion betrieben wird, wobei die Vorrichtung Mittel (34 und 41 ; 32, 28 und 33 ; 29 und 30 und 31 ; 35) zum untereinander unabhängigen Einstellen von Abstands- und Orientierungsparametern des Umsetzers (18) in bezug auf das zu prüfende Rohr (2, 12) umfaßt, wobei der Umsetzer (18) an einem Träger mit Gleitschiene (28 und 33), der ein Mittel (32) zum Einstellen seiner transversalen Position und Mittel (29 und 30 und 31, 33 und 35) zum Steuern seiner Rotation umfaßt, befestigt ist, wobei die Vorrichtung außerdem Mittel (27 und 42 ; 36 ; 37 ; und 43, 44) zum Folgen der Position des Umsetzers (18) für aufeinanderfolgende Rohre (2) des gleichen Typs und elektronische Mittel (280) umfaßt, dadurch gekennzeichnet, daß :

a) die Mittel (29 und 30 und 31) zum Steuern der Drehung des Umsetzers (18) Mittel (29 und 30 und 31) zum Steuern seiner Drehung um seine eigenen Achse und ein Mittel (33 und 35) zum Einstellen seiner Neigung in bezug auf das zu prüfende Rohr (2) umfaßt, wobei diese Steuermittel (29 und 30 und 31) und Einstellmittel (33 und 35) die Orientierung der Gesamtheit längs der besten akustischen Achse des umsetzers (18) und in der vorteilhaftesten Energiezone in bezug auf das Rohr (2) und seine Grenzfläche (3) ermöglichen ;

b) der Gleitschienenträger (33) auf einstellbare Weise um eine transversale Achse (X) drehbar an einem Teil (34) befestigt ist, das in bezug auf Stützen (36 und 37), die der Wirkung eines mit einem festen punkt (40) verbundenen Hebezylinders (39) unterworfen sind, einstellbar ist, wobei die Stützen (36 und 37) Teile (27) zum Abstützen des Trägers (26) des Umsetzers (18) am zu prüfenden Rohr (2) mittels Gleit- oder Rollmitteln (42), beispielsweise Kugeln oder Laufrollen (42), tragen und wobei die Stützen (36 und 37) durch eine oberes Teil (43) gleiten, das sich um eine zur Längsachse der Rohre (2) parallele Achse (44) so drehen kann, daß die Nachführung des Umsetzers (18) erhalten bleibt, wenn diese Rohre (2) gebogen werden ;

c) der Umsetzer (18) gut gedämpft ist und die Hauptresonanzfrequenz zwischen 4 und 20 MHz liegt und die elektronischen Mittel (280), mit denen er verbunden ist, einen Sender und einen Empfänger mit breitem Frequenzband und mit einem Verstärker mit einer Verstärkung von wenigstens gleich 80 dB umfassen ;

wobei die Gesamtheit der obigen Mittel die Gewinnung und die Erfassung wenigstens eines Doppelechos der Grenzfläche Plattierung/Rohrkern (2) entlang eines oder mehrerer Rohre desselben Loses ermöglicht.

12. Vorrichtung gemäß Anspruch 11, die mit einem Behälter (25) zum Eintauchen des Umsetzers (18) und des Rohrabschnittes (2) während der Prüfung, in der die berührungslosen Taster den Durchgang der Enden der Rohre (2) erfassen und die Abstützung des Trägers (26) des Umsetzers (18) auf jedem Rohr (2) und sein Abheden nach der Ablösung von diesem Rohr (2) steuern, versehen ist.

13. Vorrichtung gemäß Anspruch 12, in dem der Eintauchbehälter (25) Schleusen für den Eintritt und den Austritt der Rohre (2) umfaßt, wobei jede Schleuse eine bewegliche Außenabdeckung und eine bewegliche Doppelinnenwand aufweist, deren Bewegungen von den berührungslosen Tastern, die den Durchgang der Enden der Rohre (2) erfassen, so gesteuert werden, daß die Eintauchung aufeinanderfolgender Rohre (2) aufrechterhalten wird.

14. Anwendung des Verfahrens gemäß einem der Ansprüche 1 bis 10 zur Ultraschallprüfung der Dicke der Innenplattierung (5) oder Außenplattierung (15) eines oder mehrerer Rohre (2 ; 12) aus einer Zirkoniumlegierung, die mit nichtlegiertem Zirkonium oder einer anderen Zirkoniumlegierung plattiert ist, wobei der Außendurchmesser des oder der Rohre (2; 12) zwischen 8 mm und 110 mm liegt und die Dicke der Plattierung als zwischen 0,4 mm und dem 0,5-fachen der Gesamtdicke des oder der Rohre (2 ; 12) liegend betrachtet wird.

15. Anwendung gemäß Anspruch 14 auf die Prüfung der Dicke einer Innenplattierung (5) eines oder mehrerer Rohre (2) aus Zirkaloy 2 oder 4, die innen mit nichtlegiertem Zr plattiert sind.

## Claims

1. A method for the non-destructive monitoring of the thickness of a plating (5, 15) on a metal tube (2, 12), the said plating (5, 15) having a thickness of at least 0.4 mm and having an acoustic impedance which is at least 1% relative in its difference from that of the core (4) of the tube (2, 12) to which it is metallurgically bonded, monitoring being carried out by ultrasonic waves in immersion, using an emitter-receiver transducer (18) of a frequency at least equal to 4 MHz outside the said tube (2, 12), after experimental adjustment of the position of the said transducer (18) in relation to the tube (2, 12), **characterised in that** :

    a) a properly muffled transducer (18) is selected, with a principal resonance frequency of between 4 and 20 MHz ;

    b) the position of this transducer (18) in relation to the tube (2) is adjusted in that its parameters of distance and orientation are separately adjusted in order to increase the "signal to noise" ratio;

    c) to determine the thickness of the plating (5, 15) at least one double echo (9, 11, 13) or a "triple echo" (14) of the interface (8) between the plating and the core of the tube (2, 12) is used, such a "double echo" or "triple echo" corresponding respectively to two or three to-and-fro paths of ultrasonic waves of different orders but simultaneous in the thickness of the said tube (2, 12).

2. A method according to Claim 1 in which the transducer (18) has an energy spectrum dependent upon the frequency having a width (17) half way up this spectrum which is at least equal to 0.5 times its principal resonance frequency (Fp).

3. A method according to Claim 2, in which the said transducer (18) has a principal resonance frequency Fp which is comprised between 8 and 16 MHz and an energy spectrum dependent upon the frequency of width (17) at half the height of this spectrum which is comprised between 0.7 and 2 times the said principal resonance frequency (Fp).

4. A method according to any one of Claims 2 or 3, in which the said ultrasonic transducer (18) is of the cylindrical focusing type and in that the transducer (18) is so disposed in relation to the tube (2) that its focal point (21) is orientated in the longitudinal direction of the said tube (2).

5. A method according to Claim 1, in which the position of the transducer (18) in relation to the tube to be monitored is adjusted in the following principal stages :

    a1) by means of a suitable support (26), the transducer is orientated so that it is very nearly at right-angles to the axis of the tube (2) after which its distance in relation to the tube (2) is adjusted and it is moved transversely in such a way as to pick out clearly the background echo (7) ;

    b1) action is then taken on a regulating means (31 and 31 and 29) for rotation of the transducer (18) about its axis and on the angle of inclination of this transducer (18) in relation to the axis of the tube (2) ;

    c1) and the process is resumed by acting on at least a part of the four adjustments (a1) and (b1) in such a way as to increase the "signal-to-noise" ratio and to obtain on the two first runs of the ultrasonic waves in the wall of the tube (2) both the background echoes (7, 10) and one or a plurality of echoes (9, 11) from the interface (8).

6. A method according to any one of Claims 1 to 5, in which the said double echo (9, 11) from the interface (8) corresponds to two equivalent runs of ultrasonic waves, of which each comprises only a single reflection on the interface (8).

7. A method according to Claim 6 in which the thickness of the internal plating (5) on a tube (2) is determined as corresponding to the interval (47) separating the double interface echo (9) from the second run of the ultrasonic waves from the second background echo (10).

8. A method according to Claim 6 in which the thickness of the internal plating (5) of a tube (2) is determined as corresponding to half the interval (48) separating the double interface echo (9) from the second run of the first double interface echo (11) from the third run.

9. A method according to Claim 6, in which the thickness of the external plating (15) on a tube (12) is determined as corresponding to the interval separating the first background echo (7) from the double interface echo (13) from the second runs of the ultrasonic waves.

10. A method according to Claim 1, in which the tubes (2) are conveyed through a local immersion tank (26) provided with an inlet lock chamber and an outlet lock chamber, proximity detectors controlling the opening and closing of the said lock chambers in such a way as to maintain immersion of the transducer (18) and of the tubes (2) in which the support (26) of the transducer (18) is applied in a reproducible fashion to the tube (2) during the course of inspection by ultrasonic means, the said support (26) bearing on the said tube (2) through suitable contact means (42) and in which the lowering of the said support (26) into a position in which it rests on each tube (2) being controlled, along with the way it is raised after delivery of the tube (2), by means of detectors which register the passage of the ends of the tubes (2) past them.

11. An apparatus for ultrasonically checking the thickness of the plating of an immersed plated metal tube (2, 12) and comprising an ultrasonic transducer (18) used on the emission-reflection principle, the said apparatus comprising inter se independent means (34 and 41 ; 32, 28 and 33 ; 29 and 30 and 31; 33 and 35) for adjusting the parameters of distance and orientation of the said transducer (18) in relation to the said tube (2, 12) to be inspected, the said transducer (18) being fixed on a slide support (28 and 33) comprising a means (32) for regulating its transverse position and a means (29 and 30 and 31, 33 and 35) for controlling its rotation, the said apparatus also comprising follow-up means (27 and 42 ; 36 ; 37 ; and 43, 44) for tracking the position of the said transducer (18) for successive tubes (2) of the same type and electronic means (280) characterised in that :

a) the said means (29 and 30 and 31) of controlling rotation of the transducer (18) comprise means (29 and 30 and 31) of controlling its rotation about its own axis and means (33 and 35) of adjusting its inclination in relation to the said tube (2) to be inspected, the said control means (29 and 30 and 31) and adjusting means (33 and 35) jointly making it possible to achieve at best the orientation of the acoustic axis of the transducer (18) and its most favourable energy zone in relation to the said tube (2) and its interface (3) ;

b) the said slide support (33) is adjustably fixed in rotation about a transverse axis (X) on a member (34) the position of which can be adjusted in relation to uprights (36 and 37) which are subject to the action of a jack (39) connected to a fixed point (40), these uprights (36 and 37) carrying members (27) for supporting (26) the transducer (18) on the tube (2) to be inspected by sliding or rolling means (42), for example balls or rotating rollers (42), and the said uprights (36 and 37) sliding through a top member (43) adapted to rotate about an axis (44) parallel with the longitudinal axis of the tube (2) in such a way as to retain the follow-up action of the transducer (18) when these tubes (2) are slightly sagging ;

c) the said transducer (18) is properly dampened and its principal frequency of resonance is between 4 and 20 MHz, and the said electronic means (280) to which it is connected comprise an emitter and a receiver with a wide frequency band with a gain amplifier at least equal to 80 db ;

all the above-mentioned means making it possible to obtain and detect at least one double echo from the interface between the plating and the core of the tube (2) along one or more tubes of one and the same batch.

12. An apparatus according to Claim 11, provided with a tank (25) for immersion of the transducer (18) and of the portion of tube (2) which is in the process of being inspected, in which proximity detectors detect the passage of the ends of the tubes (2) and control the application of the support (26) of the transducer (18) to each tube (2) and its removal after the tube (2) has passed by.

13. An apparatus according to Claim 12, in which the immersion tank (25) comprises an inlet lock chamber and an outlet lock chamber for the tubes (2), each lock chamber comprising an exterior movable cover and an interior movable double wall, the movements of which are controlled by proximity detectors which detect the passage of the ends of the tubes (2) in such a way as to maintain immersion of successive tubes (2).

14. The application of the method according to any one of Claims 1 to 10 to the ultrasonic inspection of the thickness of the internal plating (5) or external plating (15) of one or a plurality of tubes (2, 12) of zirconium alloy plated with non-alloyed zirconium or some other zirconium alloy, the outside diameter of the tube or tubes (2, 12) being comprised between 28 mm and 110 mm while the thickness of the plating in question is between 0.4 mm and 0.5 times the total thickness of the said tube or tubes (2, 12).

15. The application according to Claim 14 to the monitoring of the thickness of the internal plating (5) on one or a plurality of tubes (2) consisting of Zircaloy 2 or 4 plated on the inside with non-alloyed Zr.

SC

1  6  7  91  9  92  8  4  3  2  5

**FIG.1**

01  7  16  9  10  11  6

**FIG.2**

6  131  13  132  12  15

**FIG.3**

FIG.4

FIG.5

FIG.6

FIG.7

FIG.8

FIG. 9